# EUROPEAN PATENT APPLICATION

(11) **EP 3 488 687 A1**
(43) Date of publication of application: **29.05.2019**
(21) Application number: 18204050.1
(22) Date of filing: 02.11.2018
(51) Int. Cl.: A01G 25/09, B60P 3/30, A01C 23/04, A01M 7/00

(54) **A WATERING APPARATUS AND AN ASSEMBLY**

(30) Priority: 22.11.2017 FI 20176040
(71) Applicant: Koiviston Kukka ja Hautaus Oy, 63800 Soini (FI)
(72) Inventor: Hyvösaho, Timo, 63800 Soini (FI)
(74) Representative: Kolster Oy Ab

(57) **Abstract**

The invention relates to a watering apparatus (1)for a small work machine running on wheels. The watering apparatus (1) comprises at least one watering head and a hose leading to the watering head. The watering apparatus (1) comprises in the transverse direction of the watering apparatus at least one member that has an extended position and a retracted position and to which at least part of the hose (7) is so fastened that the hose (7) is movable with the member. The invention further relates to an assembly comprising a small work machine running on wheels, a water tank, and watering apparatus (1) which comprises at least one watering head and a hose (7) leading to the watering head.

## Description

### Background of the invention

The invention relates to a watering apparatus for a small work machine running on wheels. The watering apparatus comprises at least one watering head and a hose leading to the watering head. The invention further related to an assembly comprising a small work machine running on wheels, a water tank, and watering apparatus which comprises at least one watering head and a hose leading to the watering head.

Conventionally, watering plants in close quarters, such as grave-yards, has been taken care of by watering cans or a stationary pipe system to which watering nozzles have been connected. Publication DE 19749673 discloses a solution where a watering basin has been placed on a grave, below a layer of soil.

### Brief description of the invention

The object of the invention is to develop a new type of watering apparatus. The object of the invention is achieved by a watering apparatus characterised by what is disclosed in the independent claims. Preferred embodiments of the invention are disclosed in the dependent claims.

The advantage of the inventive watering apparatus is that the watering apparatus is mechanically movable. By a moving watering apparatus, considerable savings in working time, compared to a watering can, may be achieved. Watering may be precisely targeted at a single plantation and so that plants are not damaged, because when dealing with plants in bloom it is important that the petals of the flower do not fall off as the water used for watering hits them. The plants to be watered may be at different distances from the small work machine. When the watering apparatus is hooked up to the small work machine, the machine is agile enough to move about in cramped places, but due to its lightness will not leave disturbing tracks on the ground.

This application uses the terms advancing direction, transverse direction, and vertical direction. Advancing direction refers to the direction of travel of the small work machine, and transverse direction to the direction perpendicular to the advancing direction. The transverse direction of the small work machine and watering apparatus is the same. Vertical direction refers to the direction perpendicular to the ground surface. The surface of the ground is for reasons of simplicity been assumed to be a level surface.

A small work machine in this application refers to a mini loader or similar, which has work hydraulics to connect accessories to.

As noted in the above, the watering apparatus is intended to be used for watering plants, in particular plants in bloom, in such places which are cramped for moving around, and the plants may be at different distances in the transverse direction of the small work machine. Furthermore, no tracks are to be caused in the ground. Such an operating environment is present in watering the plants of graves, for example.

According to an embodiment, the watering apparatus may be connected to the work hydraulics of the small work machine, and the watering apparatus has the required means to connect it to the small work machine. The apparatus comprises in the transverse direction of the watering apparatus at least one hydraulically operating member that has an extended position and a retracted position. So, the hydraulically operating member only moves back and forth in the transverse direction of the watering apparatus, which means that there is no need to carry out unnecessary, time-consuming movements.

According to an embodiment, the hydraulically operating member may be a boom that has a fixed portion advancing obliquely upwards in the transverse direction, and a moving portion, articulated to a upper part of the fixed portion, advancing downwards and having the watering head at its lower end. The moving portion of the boom may perform a pendulum-like motion between the extended and retracted positions, in other words, the moving portion of the boom may be turned around the articulation in the transverse direction. In the extended position, the lower end of the boom with its watering head is stretched out to its furthermost position in relation to the small working machine. In the retracted position, the lower end of the boom with its watering head is brought close to the small working machine.

According to another embodiment, the hydraulically operating member may be, for example, a transverse articulated boom which may be extended or shortened by controlling it with a hydraulic cylinder. At least part of the hose is attached so that the hose may be moved with the articulated boom. In other words, the hose is attached to the articulated boom so that when the articulated boom is extended to its first extreme position, the hose has little transverse elasticity left. Whereas when the articulated boom is retracted to its second extreme position, the hose forms into loops.

The watering apparatus is mechanically fastened to the small work machine and hooked up to the work hydraulics of the small work machine. Alternatively, the watering apparatus may have its own hydraulic system. The water tank is carried along, it may be integrated into the watering apparatus, or a separate water tank. It is advantageously on a trailer towed by the small work machine. It is advantageous if the water tank is replaceable so that when one water tank is being used, another one may be filled.

The hose coming from the water tank is connected to a pump, and a hose coming from the pump is connected to the watering nozzles. Alternatively, the water tank may be pressurized in which case a pump is not needed. The hose leading from the pump or water tank to the watering nozzles may have a branch, along which a desired additive, such as fertilizer, is led to the water used for watering. The flow in the branch is usually adjustable.

In a usage situation, the hydraulically operating member, such as the articulated boom, is controlled by a hydraulic cylinder, making use of the actuators of the small work machine. The watering apparatus may be used from the cabin of the small work machine. The small work machine is stopped at a plant, and the hydraulically operating member is extended by such an amount that the nozzle reaches the root of the plant. The required amount of water is given to the plant root by using a magnetic valve, for example, and then the travel continues to the next plant. The plants may be at different distances from the small work machine, and the hydraulically operating member is always extended as required, depending on the distance. When both sides of the small work machine have hydraulically operating members, it is possible to water plants on both sides of the small work machine.

According to a second embodiment, the operation of the watering apparatus is otherwise similar to the above description, but the hydraulic cylinder has been replaced by an electromechanical solution.

According to a third embodiment, the operation of the watering apparatus is otherwise similar to the first embodiment, but the articulated boom has been replaced by a telescopic boom. In such a case, the boom comprises pipes inside each other, along which the watering hose moves. The telescopic boom may be a hydraulically operating member, or it may be an electromechanically operating member.

### Brief description of the figures

The invention will now be described in more detail in connection with preferred embodiments and with reference to the accompanying drawings, in which:
Figure 1 is a perspective view of a watering apparatus;
Figure 2 is a perspective view of a detail of the watering apparatus when the articulated boom is in its retracted position;
Figure 3 is a perspective view of a detail of the watering apparatus when the articulated boom is extended.

### Detailed description of the invention

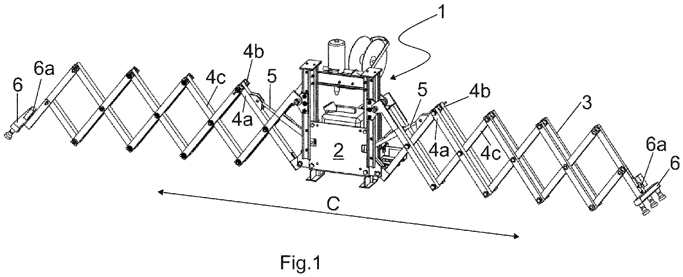

Figure 1 is a perspective view of a watering apparatus 1 without a hose. The transverse direction of the watering apparatus 1 is denoted by a twin-headed arrow C in Figure 1.

The watering apparatus 1 comprises a centre part 2 which is connectable to the work hydraulics of the small work machine and mountable to the small work machine. The watering apparatus 1 is usually fixed to the front part of the small work machine whereby controlling the watering is easier.

On at least one side of the centre part 2 there is a hydraulically operating member, an articulated boom 3 in the case of Figure 1. Usually there are hydraulically operating members, such as articulated booms 3, on both sides of the centre part 2. The articulated boom 3 consists of pieces 4 articulated to each other. The articulated boom 3 may consist of two rectilinear longitudinal pieces 4a, 4b joined together, between which a piece 4c has been articulated. The articulated boom 3 has an extended position and a retracted position, between which the articulated boom 3 may move continuously. In the retracted position, the articulated boom 3 is compressed by the side of the small work machine, and in the extended position the end of the articulated boom 3 is at the maximum distance from the small work machine.

The movement of the articulated boom 3 is adjusted by a hydraulic cylinder 5 which is secured to the centre part 2 and to the piece 4a or 4b by the side of the centre piece 2, or between them. The hydraulic cylinder 5 is advantageously fastened to the lower part of the centre part 2 and the upper part of the piece 4a or 4b or their interspace, whereby the movement of the piston of the hydraulic cylinder 5 established an efficient folding or straightening of the articulated boom 3.

At the outmost end of a lattice 3, there is/are a nozzle/nozzles 6 to which water is led through an inlet 6a. The nozzle/nozzles 6 is/are watering nozzles known per se.

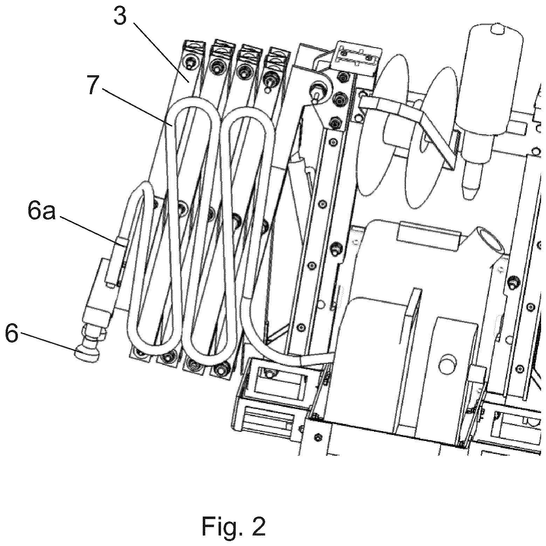

Figure 2 is a perspective view of a detail of the watering apparatus 2 when the articulated boom 3 is in its retracted position The hydraulic cylinder 5 is at its minimum length, whereby it has pulled the lattice 3 together. The watering hose 7 is fastened to centre joints 8 of the lattice 3. When the articulated boom 3 folds up, the hose 7 folds into loops.

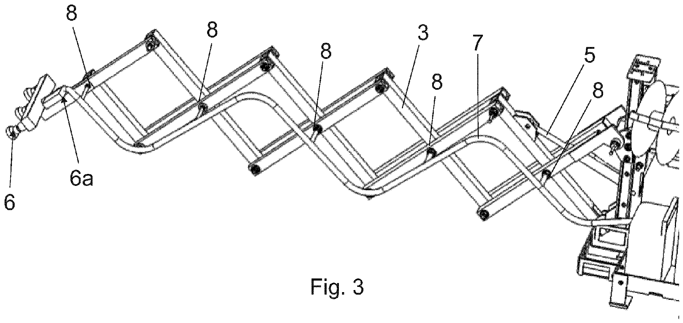

Figure 3 is a perspective view of a detail of the watering apparatus when the articulated boom is extended. The hydraulic cylinder 5 is longer than the minimum length, whereby the hydraulic cylinder 5 has unfolded the articulated boom 3 to some extent. The watering hose 7 is fastened to centre joints 8 of the articulated boom 3. When the articulated boom 3 unfolds, the hose 7 begins to straighten.

A person skilled in the art will find it obvious that, as technology advances, the basic idea of the invention may be implemented in many different ways. The invention and its embodiments are thus not restricted to the above-described examples but may vary within the scope of the claims.

## Claims

1. A watering apparatus (1) for a small work machine running on wheels, the watering apparatus (1) comprising at least one watering head and a hose leading to the watering head, **characterised in that** the watering apparatus (1) comprises in the transverse direction of the watering apparatus at least one member that has an extended position and a retracted position and to which at least part of the hose (7) is so fastened that the hose (7) is movable with the member.

2. A watering apparatus as claimed in claim 1, **characterised in that** the member comprises a boom turnable around an articulation.

3. A watering apparatus as claimed in claim 1, **characterised in that** the member is a transverse articulated boom (3).

4. A watering apparatus as claimed in any one of the preceding claims, **characterised in that** the watering apparatus (1) comprises means to connect to work hydraulics of the small work machine.

5. A watering apparatus as claimed in any one of the preceding claims 1 to 3, **characterised in that** the member is arranged to move electromechanically.

6. A watering apparatus as claimed in any one of the preceding claims 1 to 3, **characterised in that** the watering apparatus has its own hydraulic system.

7. A watering apparatus as claimed in any one of the preceding claims, **characterised in that** the watering head comprises at least one nozzle (6).

8. A watering apparatus as claimed in any one of the preceding claims, **characterised in that** the watering apparatus (1) comprises a tank for additives.

9. An assembly which comprises a small work machine running on wheels, a water tank, and a watering apparatus (1) comprising at least one watering head and a hose (7) leading to the watering head, **characterised in that** the watering apparatus (1) comprises in the transverse direction of the watering apparatus at least one member that has an extended position and a retracted position and to which at least part of the hose (7) is so fastened that the hose (7) is movable with the member.

10. An assembly as claimed in claim 9, **characterised in that** the watering apparatus (1) is connected to the work hydraulics of the small work machine.

11. An assembly as claimed in claim 9 or 10, **characterised in that** the assembly has a trailer on which the water tank is placed.

12. An assembly as claimed in claim 9 or 10, **characterised in that** the water tank is integrated into the watering apparatus.

13. An assembly as claimed in claim 11 or 12, **characterised in that** the in connection with the water tank there is a pressure tank.

14. An assembly as claimed in any one of the preceding claims 9 to 12, **characterised in that** the assembly comprises a pump.
